# EUROPEAN PATENT APPLICATION

(11) **EP 4 641 145 A1**
(43) Date of publication of application: **29.10.2025**
(21) Application number: 23906461.1
(22) Date of filing: 25.10.2023
(51) Int. Cl.: G01F 1/84, G01F 1/00, G01F 1/74

(54) **MEASUREMENT DEVICE**

(30) Priority: 23.12.2022 JP 2022207533
(71) Applicant: Yokogawa Electric Corporation, Tokyo 180-8750 (JP)
(72) Inventor: ISHINABE Atsushi, Musashino-shi, Tokyo 180-8750 (JP)
(74) Representative: Zimmermann, Tankred Klaus
(86) International application number: PCT/JP2023/038589
(87) International publication number: WO 2024/135087

(57) **Abstract**

A measurement device 1 according to the present disclosure is a measurement device 1 configured to measure at least one type of parameter indicating the state of a fluid. The measurement device 1 includes a detector 10 configured to acquire, as data, at least one type of sensor value required for calculating the parameter, and an arithmetic unit 30 configured to calculate the parameter based on the data acquired using the detector 10. The arithmetic unit 30 is configured to acquire the result of at least one of a regression process or a classification process related to the parameter, which has been performed using the acquired data and a learning model built in advance based on the data when foreign matter has been mixed in the fluid.

## Description

### CROSS-REFERENCE TO RELATED APPLICATION

This application claims priority to Japanese Patent Application No. 2022-207533, filed on December 23, 2022, the entire contents of which are incorporated herein by reference.

### TECHNICAL FIELD

The present disclosure relates to a measurement device.

### BACKGROUND

Technology related to measurement devices that measure parameters indicating the state of a fluid, including the flow rate, density, and the like of the fluid, is conventionally known. For example, Patent Literature (PTL) 1 discloses a field instrument that measures the state quantity of a fluid and that can acquire more accurate measurement values even when a slag flow occurs.

### CITATION LIST

### Patent Literature

PTL 1: JP 6608396 B2

### SUMMARY

### (Technical Problem)

With conventional technology, however, when foreign matter such as bubbles is mixed in a fluid, it becomes difficult to accurately measure parameters, and errors can occur in measurement values of the parameters. The field instrument described in PTL 1 is intended to solve such a problem. However, while this field instrument can be applied to fluids for which parameters take approximately constant values when no foreign matter is mixed, this field instrument is difficult to apply to fluids for which parameters vary over time due to operation, for example, in a distillation process.

The present disclosure aims at providing a measurement device that can measure parameters more accurately, even when foreign matter has been mixed in a fluid while the parameters of the fluid are varying over time.

### (Solution to Problem)

A measurement device according to some embodiments is a measurement device configured to measure at least one type of parameter indicating the state of a fluid, the measurement device including:
a detector configured to acquire, as data, at least one type of sensor value required for calculating the parameter; and
an arithmetic unit configured to calculate the parameter based on the data acquired using the detector,
wherein the arithmetic unit is configured to acquire the result of at least one of a regression process or a classification or clustering process related to the parameter, the regression process or the classification or clustering process being performed using the acquired data and a learning model built in advance based on the data when foreign matter has been mixed in the fluid.

Therefore, the measurement device can measure the parameter more accurately, even when foreign matter has been mixed in the fluid while the parameter of the fluid is varying over time. The measurement device acquires the result of at least one of the regression process or the classification or clustering process related to the parameter, which has been performed using the acquired data and the learning model built in advance based on the data when foreign matter has been mixed in the fluid. Therefore, the measurement device can also be easily applied to fluids whose parameters vary over time, such as in a distillation process. Even when foreign matter such as bubbles is mixed in such fluids, the measurement device can output accurate measurement values for the parameters using the regression process.

In the measurement device according to one embodiment, the arithmetic unit may be configured to acquire the result by performing at least one of the regression process or the classification or clustering process. The measurement device may perform at least one of the regression process or the classification or clustering process by itself. Thereby, the measurement device can complete, within the measurement device itself, various processes from a learning phase for building the learning model to an estimation phase using the learning model after learning.

In the measurement device according to one embodiment, the arithmetic unit may be configured to acquire, via communication, the result of at least one of the regression process or the classification or clustering process performed outside the measurement device. Accordingly, the measurement device does not need to perform calculation related to at least one of the regression process or the classification or clustering process. Therefore, the measurement device can reduce an operational load related to its operation.

In the measurement device according to one embodiment, the arithmetic unit may be configured to build in advance the learning model through supervised learning using the data when foreign matter has been mixed in the fluid, and a label, or build in advance the learning model through unsupervised learning. It is thereby possible to perform a learning process with higher accuracy based on the label. The measurement device can perform at least one of the regression process or the classification or clustering process with higher accuracy, using the learning model built in such a learning process.

In the measurement device according to one embodiment, the arithmetic unit may be configured to acquire results of the regression process and the classification or clustering process that are performed using learning models different from each other. The measurement device uses the independent learning models for the regression process and the classification or clustering process. The use of the plurality of learning models, as described above, allows the measurement device to achieve output with higher accuracy in the regression process and the classification or clustering process.

In the measurement device according to one embodiment,
the classification or clustering process may include a process of classifying or clustering the presence or absence of mixture of foreign matter in the fluid, and
the arithmetic unit may be configured to determine, using the learning model, a first threshold value that is to be compared with an average value of a moving window of a predetermined time interval set for at least one type of the parameter or the sensor value in order to classify or cluster the presence or absence of mixture of foreign matter.

The measurement device can thereby determine the first threshold value more appropriately. The measurement device can determine the first threshold value, which is conventionally set by a user arbitrarily based on the user's experience or the like, objectively and accurately. Therefore, the measurement device can perform the classification or clustering process for the presence or absence of mixture of foreign matter using the first threshold value with higher accuracy.

In the measurement device according to one embodiment, upon classifying or clustering the presence of mixture of foreign matter in the fluid, the arithmetic unit may be configured to perform the regression process using the learning model, and output the parameter. This allows the measurement device to output a more accurate measurement value by regressing the parameter, even when an anomaly occurs in the parameter in a normal process due to the effect of the foreign matter mixed in the fluid.

In the measurement device according to one embodiment, the arithmetic unit may be configured to correct the output parameter, based on the difference between the output parameter and the parameter during the absence of mixture of foreign matter in the fluid. Therefore, even when there are variations in an operation method, parameters, and the like at the beginning of a process, the measurement device can acquire an error in the parameter after the regression process, which is based on such variations, and correct the error. The measurement device can accurately correct the parameter after the regression process, even when the conditions, including the type and quantity of small bubbles such as microbubbles, the time when bubbles continue to enter for a long time, and the like, vary from operation to operation.

In the measurement device according to one embodiment,
the classification or clustering process may include a process of classifying or clustering whether operation of the measurement device has suspended, and
the arithmetic unit may be configured to determine, using the learning model, a second threshold value that is set for at least one type of the parameter in order to set a flag indicating as being in operation or under suspension.

The measurement device can thereby determine the second threshold value more appropriately. The measurement device can determine the second threshold value, which is conventionally set by the user arbitrarily based on the user's experience or the like, objectively and accurately. Therefore, the measurement device can perform the classification or clustering process for suspension classification or clustering to reduce false detection of operation suspension using the second threshold value with higher accuracy.

In the measurement device according to one embodiment, the parameter may include at least one type of the density, volume flow rate, mass flow rate, or bubble volume fraction of the fluid. The measurement device can therefore perform the measurement and regression process of the parameter required for functioning as a Coriolis flowmeter, for example. The measurement device can function as a Coriolis flowmeter.

### (Advantageous Effect)

According to the present disclosure, it is possible to provide a measurement device that can measure parameters more accurately, even when foreign matter has been mixed in a fluid while the parameters of the fluid are varying over time.

### BRIEF DESCRIPTION F THE DRAWINGS

In the accompanying drawings:
FIG. 1 is a block diagram illustrating a schematic configuration of a measurement device according to a first embodiment of the present disclosure;
FIG. 2 is a schematic diagram that explains the outline of a regression process and a classification process by an arithmetic unit in FIG. 1;
FIG. 3 is a schematic diagram that explains an example of the regression process performed using a first learning model after learning;
FIG. 4 is a schematic diagram that explains an example of the classification process performed using a second learning model after learning;
FIG. 5 is a flowchart that explains a first example of operations of the measurement device in FIG. 1;
FIG. 6 is a flowchart that explains a second example of the operations of the measurement device in FIG. 1;
FIG. 7 is a schematic diagram that explains a third example of the operations of the measurement device in FIG. 1;
FIG. 8 is a flowchart that explains a fourth example of the operations of the measurement device in FIG. 1; and
FIG. 9 is a block diagram illustrating a schematic configuration of a measurement device according to a second embodiment of the present disclosure.

### DETAILED DESCRIPTION

The background and problems of conventional technology will be explained in more detail.

In measurement devices such as field instruments, when foreign matter such as bubbles is mixed in a fluid to be measured, it becomes difficult to accurately measure parameters indicating the state of the fluid, including a flow rate, density, and the like. For example, errors can occur in measurement values of the parameters.

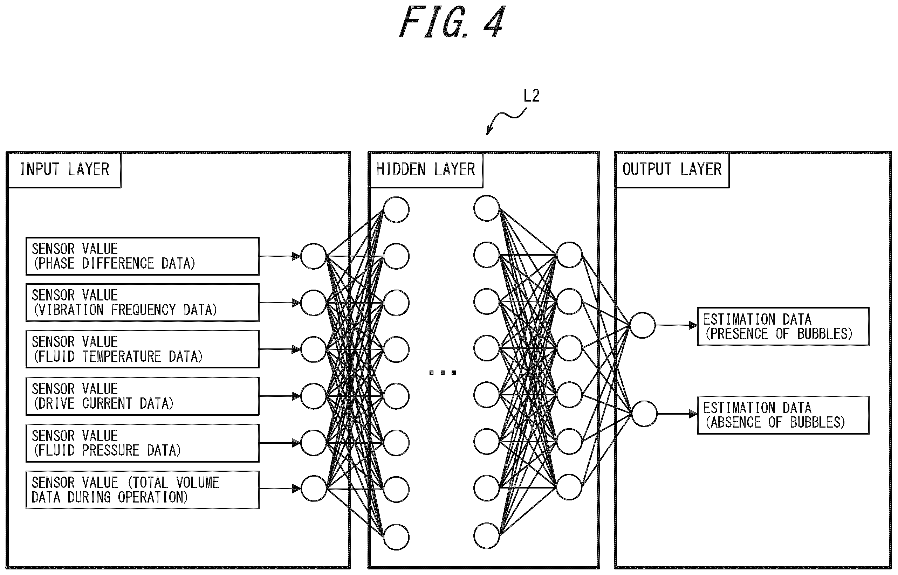

For example, PTL 1 gives an example of a Coriolis flowmeter as a field instrument. In the Coriolis flowmeter, for example, when bubbles, as foreign matter, are mixed in a fluid, measurement values of parameters, including the density and the like of the fluid, are affected by mixture of the bubbles. At this time, as illustrated in FIG. 4 of PTL 1, the measurement values of the parameters obtained are lower than actual values when no bubbles are mixed. This may cause large errors between the measurement values and the actual values.

In the field instrument described in PTL 1, in order to solve this problem, a drive current value, which is called "Drive Current", of the Coriolis flowmeter is used as a threshold value to classify the presence or absence of the occurrence of a slag flow or the like. The threshold value at this time generally includes hysteresis. Accordingly, a method in which the presence or absence of mixture of bubbles in a fluid is classified and measurement values when the bubbles are mixed are corrected based on normal output values when no bubbles are mixed is used.

However, the field instrument described in PTL 1 can be applied to fluids for which parameters take approximately constant values when no foreign matter is mixed, but is difficult to apply to fluids for which parameters vary over time due to operation, for example, in a distillation process. Depending on conditions including the type and quantity of small bubbles such as microbubbles, the time when bubbles continue to enter for a long time, and the like, it is difficult to make accurate corrections.

In order to solve the above problem, the present disclosure aims at providing a measurement device that can measure parameters more accurately, even when foreign matter has been mixed in a fluid while the parameters of the fluid are varying over time.

Embodiments of the present disclosure will be mainly explained below with reference to the accompanying drawings.

### (First Embodiment)

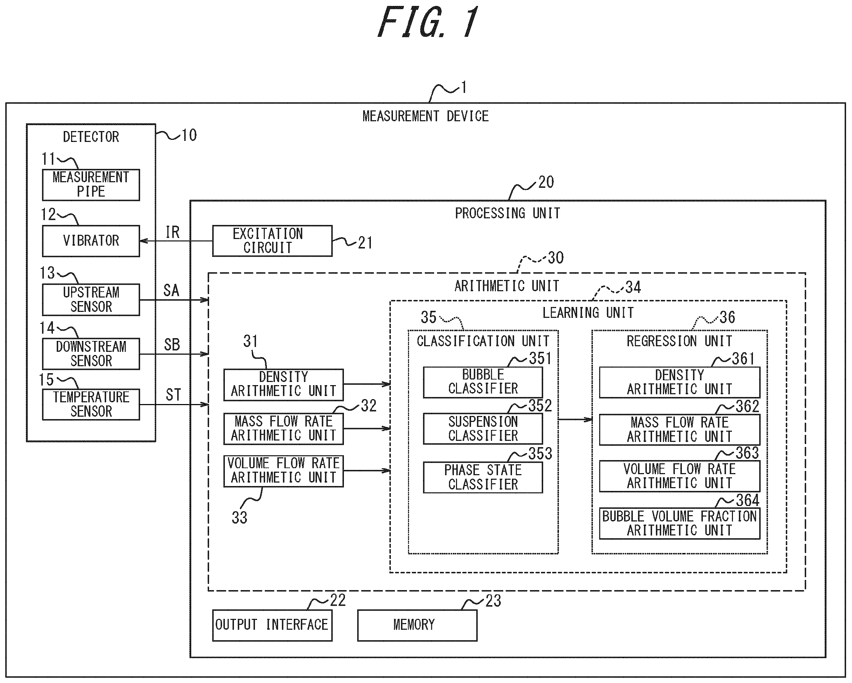

FIG. 1 is a block diagram illustrating a schematic configuration of a measurement device 1 according to a first embodiment of the present disclosure. With reference to FIG. 1, the configuration and functions of the measurement device 1 according to the first embodiment will be mainly explained.

The measurement device 1 is configured as one of field instruments, for example. In the present disclosure, the "field instruments" include any instruments that perform measurement processes for physical quantities to be measured and acquire measurement values. In the present disclosure, the "physical quantities" include, for example, the temperatures, pressures, flow rates, and PHs of fluids, including gases, liquids, and the like generated in plant facilities in which the field instruments are located, as well as the corrosion levels, vibration amounts, and the like of the plant facilities. Not limited to these, the physical quantities include state parameters, including temperatures, pressures, and the like, related to actuators, including valves, motors, relays, and the like.

In the present disclosure, the "plant facilities" include, for example, industrial plants such as chemical plants, as well as plants that manage and control wellheads, including gas fields, oil fields, and the like, and surroundings thereof. In addition, the plant facilities may also include plants that manage and control hydroelectric, thermal, nuclear, and other power generation, as well as plants that manage and control solar, wind power, and other environmental power generation, and plants that manage and control water supply and sewage, dams, and the like.

For example, the measurement device 1 includes any device that measures at least one type of parameter indicating the state of a fluid. In the present disclosure, the "fluid" includes a liquid, for example. The "parameter" includes at least one type of the density, volume flow rate, mass flow rate, or bubble volume fraction of the fluid, for example. The "bubble volume fraction" means, for example, the ratio of a gas component contained in the fluid. The ratio of the gas component is based on a weight basis or a volume basis. The measurement device 1 measures, for example, the flow rate of the fluid flowing through a pipe. The measurement device 1 includes, for example, a Coriolis flowmeter. The Coriolis flowmeter is an example of the field instruments. The measurement device 1 has a detector 10, a processing unit 20, and an arithmetic unit 30 included in the processing unit 20.

The detector 10 vibrates a measurement pipe 11 through which the fluid, as a measurement target, flows, and detects vibration upstream and downstream and the temperature of the measurement pipe 11. The detector 10 has a vibrator 12, an upstream sensor 13, a downstream sensor 14, and a temperature sensor 15, in addition to the measurement pipe 11.

The measurement pipe 11 includes, for example, a straight pipe whose both ends are fixedly supported by support members. The measurement pipe 11 is not limited to this, and may be in other shapes, such as the shape of the letter U.

The vibrator 12 includes any vibration module that vertically and mechanically vibrates the measurement pipe 11. The vibrator 12 is provided around the measurement pipe 11 through which the fluid flows. For example, the vibrator 12 is installed in the vicinity of the middle of the measurement pipe 11. The vibrator 12 is electrically connected to the processing unit 20.

The upstream sensor 13 includes any sensor that can detect the vibration of the measurement pipe 11 caused by the vibrator 12. The upstream sensor 13 is fixed to the side on which the fluid flows into the measurement pipe 11, that is, upstream from the vicinity of the middle of the measurement pipe 11 in which the vibrator 12 is installed.

The downstream sensor 14 includes any sensor that can detect the vibration of the measurement pipe 11 caused by the vibrator 12. The downstream sensor 14 is fixed to the side on which the fluid flows out of the measurement pipe 11, that is, downstream from the vicinity of the middle of the measurement pipe 11 in which the vibrator 12 is installed.

Each of the upstream sensor 13 and the downstream sensor 14 is electrically connected to the arithmetic unit 30 of the processing unit 20.

The temperature sensor 15 includes any sensor that can measure the surface temperature of the measurement pipe 11. The temperature sensor 15 is fixed on a surface of the measurement pipe 11, for example, downstream from the vicinity of the middle of the measurement pipe 11 in which the vibrator 12 is installed. The temperature sensor 15 is fixed in the vicinity of the downstream sensor 14. The temperature sensor 15 is electrically connected to the arithmetic unit 30 of the processing unit 20. The temperature sensor 15 is used for reducing a measurement error in the parameter due to temperature fluctuations.

Operations of the detector 10, which is configured as described above, will be mainly explained.

The vibrator 12 vibrates the measurement pipe 11 in a predetermined vibration mode according to a drive current IR output from the processing unit 20. For example, the vibrator 12 vibrates the measurement pipe 11 in a primary vibration mode in which nodes of vibration appear only at both ends of the measurement pipe 11, which is fixedly supported by the support members.

When the fluid to be measured flows through the measurement pipe 11 while the vibrator 12 is vibrating the measurement pipe 11 in the primary vibration mode, the measurement pipe 11 vibrates in a secondary vibration mode in which nodes of vibration appear at the both ends of the measurement pipe 11, which is fixedly supported by the support members, and at a midpoint between the two ends. In practice, the measurement pipe 11 may vibrate in a vibration mode in which two types of vibration modes i.e. the primary vibration mode and the secondary vibration mode are superimposed.

The upstream sensor 13 measures an upstream displacement of the measurement pipe 11 that is vibrating in the vibration mode described above. The upstream sensor 13 outputs the measured displacement as a displacement signal SA to the arithmetic unit 30 of the processing unit 20. The downstream sensor 14 measures a downstream displacement of the measurement pipe 11 that is vibrating in the vibration mode described above. The downstream sensor 14 outputs the measured displacement as a displacement signal SB to the arithmetic unit 30 of the processing unit 20.

The temperature sensor 15 measures the surface temperature of the measurement pipe 11 on the surface located downstream of the measurement pipe 11. The temperature sensor 15 outputs the measured surface temperature of the measurement pipe 11 as a temperature signal ST to the arithmetic unit 30 of the processing unit 20.

The processing unit 20 has an excitation circuit 21, an output interface 22, and a memory 23, in addition to the arithmetic unit 30. The arithmetic unit 30 has a density arithmetic unit 31, a mass flow rate arithmetic unit 32, a volume flow rate arithmetic unit 33, and a learning unit 34. The learning unit 34 further has a classification unit 35 and a regression unit 36. The classification unit 35 has a bubble classifier 351, a suspension classifier 352, and a phase state classifier 353. The regression unit 36 has a density arithmetic unit 361, a mass flow rate arithmetic unit 362, a volume flow rate arithmetic unit 363, and a bubble volume fraction arithmetic unit 364.

The excitation circuit 21 is connected to the vibrator 12. The excitation circuit 21 drives the vibrator 12, for example, in a sinusoidal manner by outputting, to the vibrator 12, the drive current IR corresponding to the displacement signal SA. The excitation circuit 21 may drive the vibrator 12, for example, in a sinusoidal manner by outputting, to the vibrator 12, the drive current IR corresponding to the displacement signal SB, instead of the displacement signal SA.

The output interface 22 includes any output interface that outputs information to notify a user of the measurement device 1. The output interface includes, for example, a display that outputs the information in the form of video, and a speaker that outputs the information in the form of audio. The display includes, for example, a liquid crystal display, an organic electro luminescent (EL) display, and the like.

The memory 23 includes any memory module, including a hard disk drive (HDD), a solid state drive (SSD), an electrically erasable programmable read-only memory (EEPROM), a read-only memory (ROM), a random access memory (RAM), and the like. The memory 23 functions as a main memory device, an auxiliary memory device, or a cache memory, for example. The memory 23 is not limited to being built in the measurement device 1, and may include an external memory module connected via a digital input/output port such as a universal serial bus (USB). The memory 23 stores any information used in operations of the measurement device 1.

The arithmetic unit 30 includes one or more processors. In the present disclosure, the "processors" are, for example, general purpose processors or dedicated processors specialized for specific processes, but are not limited to these. The arithmetic unit 30 performs various arithmetic processes required for the operations of the measurement device 1.

The arithmetic unit 30 measures the vibration frequency of the measurement pipe 11, based on at least one of the displacement signal SA or SB output from the detector 10. The density arithmetic unit 31 of the arithmetic unit 30 calculates, based on the measured vibration frequency, the mass i.e., density of the fluid to be measured. The mass flow rate arithmetic unit 32 of the arithmetic unit 30 calculates the mass flow rate of the fluid flowing through the measurement pipe 11, based on the phase difference between the displacement signals SA and SB output from the detector 10. The volume flow rate arithmetic unit 33 of the arithmetic unit 30 calculates the volume flow rate of the fluid flowing through the measurement pipe 11 by dividing the mass flow rate calculated by the mass flow rate arithmetic unit 32 by the density calculated by the density arithmetic unit 31.

The detector 10 is used to acquire, as data, at least one type of sensor value required for calculating the above-described parameter by the arithmetic unit 30. The arithmetic unit 30 calculates the parameter based on the data acquired using the detector 10. In the present disclosure, the "data" includes at least one type of phase difference data, vibration frequency data, fluid temperature data, drive current data, fluid pressure data, or total volume data during operation.

The phase difference data is data in which the phase difference between the displacement signals SA and SB, which are output from the upstream sensor 13 and the downstream sensor 14 of the detector 10, respectively, is used as a sensor value. The vibration frequency data is data in which the vibration frequency of the measurement pipe 11, which is measured based on at least one of the displacement signal SA or SB output from the upstream sensor 13 or the downstream sensor 14 of the detector 10, respectively, is used as a sensor value.

The fluid temperature data is data in which the temperature of the measurement pipe 11, which is measured based on the temperature signal ST output from the temperature sensor 15 of the detector 10, is used as a sensor value. The drive current data is data in which the drive current IR output from the excitation circuit 21 to operate the vibrator 12 of the detector 10 is used as a sensor value.

The fluid pressure data is data that can be obtained by inputting a measurement value of a pressure gauge or the like installed separately from the measurement device 1, or data in which pressure set as a fixed value in the arithmetic unit 30 is used as a sensor value. The total volume data during operation is data in which the total volume of the fluid flowing through the measurement pipe 11 during operation of the measurement device 1, which is measured based on the displacement signals SA and SB output from the upstream sensor 13 and the downstream sensor 14 of the detector 10, respectively, is used as a sensor value.

The learning unit 34 of the arithmetic unit 30 acquires the result of at least one of a regression process or a classification process related to the parameter, which is performed using the data acquired using the detector 10 and a learning model built in advance based on the data when foreign matter has been mixed in the fluid. The arithmetic unit 30 acquires the result by performing at least one of the regression process or the classification process. Upon detecting that foreign matter is mixed in the fluid, the learning unit 34 outputs the parameter by regressing a necessary value as a measurement value of the parameter based on the learning model after learning, which has been built in advance.

In the present disclosure, the "foreign matter" includes, for example, bubbles. The foreign matter is hereinafter described as being bubbles, but is not limited to this. The foreign matter may include any foreign matter that affects the measurement value of the parameter obtained by the measurement device 1. The same explanation as below also applies to the foreign matter.

In the present disclosure, the "regression process" related to the parameter includes, for example, a process of regressing a necessary value as a measurement value of the parameter based on the learning model after learning, which has been built in advance, when the measurement value of the parameter is abnormal due to bubbles being mixed in the fluid. The "classification process" related to the parameter includes, for example, a process of classifying the presence or absence of mixture of bubbles in the fluid, a process of classifying whether the operation of the measurement device 1 has suspended, a process of classifying the phase state of the fluid to be measured, and the like.

In the present disclosure, the "phase state" refers to the total number of gas and liquid phases in a multiphase flow, in the fluid of two or more types of mixed components, including gases and liquids. For example, when bubbles are mixed in a fluid of two components separated by a liquid phase in a multiphase flow, the phase state is 3.

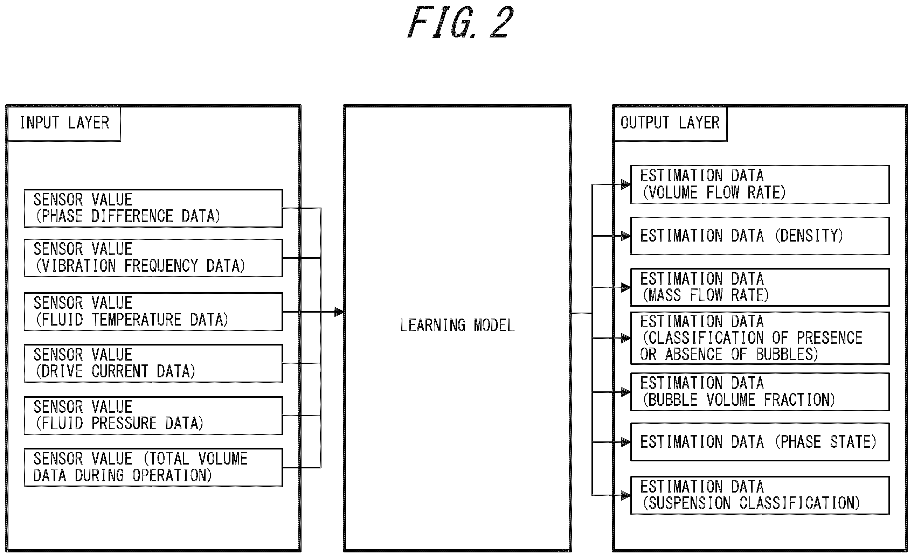

FIG. 2 is a schematic diagram that explains the outline of the regression process and the classification process performed by the arithmetic unit 30 in FIG. 1. FIG. 2 illustrates the outline of the processes performed using the learning model after learning.

For the regression process, the learning model described above has been built using models that output regression results of multiple regression analysis, neural networks, support vector regression, Gaussian process regression, regression trees, logistic regression, autoregressive model s, and the like. For the classification process, the learning model described above has been built using models that output classification results of logistic regression, neural networks, support vector machines, classification trees, change-point detection, k-nearest neighbor algorithms, k-means clustering, and the like. In the present disclosure, the "neural networks" include, for example, self-organizing maps, convolutional neural networks, recurrent neural networks, long short term memory neural networks, and the like.

An input layer uses at least one type of sensor value obtained inside the measurement device 1, as a Coriolis flowmeter. For example, the sensor value used in the input layer is included in the data described above. More specifically, the sensor value is included in the phase difference data, the vibration frequency data, the fluid temperature data, the drive current data, the fluid pressure data, and the total volume data during operation.

An output layer uses at least one type of estimation data related to the parameter output from the measurement device 1 as a Coriolis flowmeter or estimation data related to the classification process. For example, the estimation data used in the output layer is related to the volume flow rate, density, mass flow rate, and bubble volume fraction of the fluid. For example, the estimation data used in the output layer is related to the classification of the presence or absence of bubbles mixed in the fluid, the classification of the phase state of the fluid to be measured, and the classification of whether the operation of the measurement device 1 has suspended.

The learning unit 34 of the arithmetic unit 30 builds the learning model in advance through supervised learning, using data when bubbles have been mixed in the fluid, and labels. Labeled training data used for building the learning model includes, for example, time series data obtained for at least one type of parameter when bubbles have been mixed in the fluid. The time series data is continuous data including the time when the bubbles have been mixed. The training data is, for example, the time series data that has been obtained by recording the state of the fluid as photographs or video using an imaging device such as a camera, and in which the labels of the time when the mixture of the bubbles has been detected are continuous. The learning unit 34 builds the learning model using, as feature values, temporal cumulative amounts obtained from data acquired using the detector 10 of the measurement device 1 and feature values thereof.

Such training data can be obtained using measuring instruments such as level meters, weighing scales, and density meters, as well as visual methods. In general, the relationship expression of volume flow rate = mass flow rate / density holds true. Therefore, when the training data is prepared for at least two types of the volume flow rate, the mass flow rate, or the density, it is possible to indirectly obtain training data for the remaining one type. The learning unit 34 evaluates regression from data related to various sensor values, based on the obtained training data.

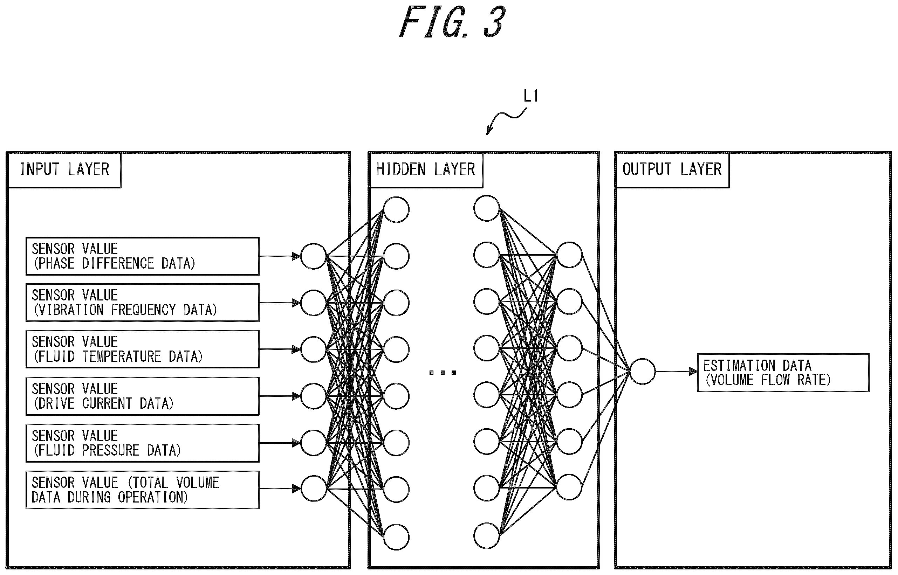

FIG. 3 is a schematic diagram that explains an example of the regression process performed using a first learning model L1 after learning. FIG. 3 illustrates, as an example, the first learning model L1 of a neural network during the regression process. FIG. 4 is a schematic diagram that explains an example of the classification process performed using a second learning model L2. FIG. 4 illustrates, as an example, the second learning model L2 of a neural network during the classification process with two classes.

The learning unit 34 of the arithmetic unit 30 acquires the results of the regression process and the classification process that are performed using the learning models different from each other. The learning unit 34 uses the independent learning models for the regression process and the classification process. As an example, the learning unit 34 uses, in the regression process, the same first learning model L1 as each other for different types of parameters. As an example, the learning unit 34 uses, in the classification process, the same second learning model L2 as each other for different types of classification.

The learning unit 34 can set any number of layers and neurons for a hidden layer. The learning unit 34 sets general nonlinear functions such as ramp functions, sigmoid functions, and hyperbolic tangent functions, as activation functions. For multi-class classification, the learning unit 34 sets softmax functions to the output layer, based on the perspective of the error back-propagation algorithm.

The regression unit 36 of the learning unit 34 performs, based on the first learning model L1, the regression process for the density, mass flow rate, volume flow rate, bubble volume fraction, and the like of the fluid using the obtained sensor values. FIG. 3 illustrates, as an example, the regression process for the volume flow rate by the volume flow rate arithmetic unit 363.

The density arithmetic unit 361 performs the regression process for the density of the fluid. For example, the density arithmetic unit 361 uses, in the regression process for the density of the fluid, a logistic regression model that has used the total volume during operation and the fluid temperature, among the sensor values.

The mass flow rate arithmetic unit 362 performs the regression process for the mass flow rate. For example, the mass flow rate arithmetic unit 362 uses, in the regression process for the mass flow rate, a linear regression model that has used the phase difference, the fluid temperature, the drive current, the density of the fluid before the regression process, and the total volume during operation, among the sensor values.

The volume flow rate arithmetic unit 363 performs the regression process for the volume flow rate. For example, the volume flow rate arithmetic unit 363 uses, in the regression process for the volume flow rate, a linear regression model that has used the phase difference, the fluid temperature, the drive current, and the density of the fluid before the regression process, among the sensor values.

The bubble volume fraction arithmetic unit 364 performs the regression process for the bubble volume fraction. For example, the bubble volume fraction arithmetic unit 364 uses, in the regression process for the bubble volume fraction, a linear regression model that has used the phase difference, the fluid temperature, the drive current, the density of the fluid before the regression process, and the total volume during operation, among the sensor values.

The classification unit 35 of the learning unit 34 performs, based on the second learning model L2, the classification process for the classification of the presence or absence of mixture of bubbles, the classification of operation suspension, the classification of the phase state, and the like, using the obtained sensor values. FIG. 4 illustrates, as an example, the classification process for the presence or absence of mixture of bubbles by the bubble classifier 351.

The bubble classifier 351 performs the classification process for the presence or absence of mixture of bubbles. For example, the bubble classifier 351 uses, in the classification process for the presence or absence of mixture of bubbles, change-point detection using the phase difference, among the sensor values.

The suspension classifier 352 performs the classification process for operation suspension. For example, the suspension classifier 352 uses, in the classification process for operation suspension, the phase difference, the fluid temperature, the drive current, the density of the fluid before the regression process, and the total volume during operation, among the sensor values.

The phase state classifier 353 performs the classification process for the phase state. For example, the phase state classifier 353 uses, in the classification process for the phase state, the phase difference, the fluid temperature, the drive current, the density of the fluid before the regression process, and the total volume during operation, among the sensor values.

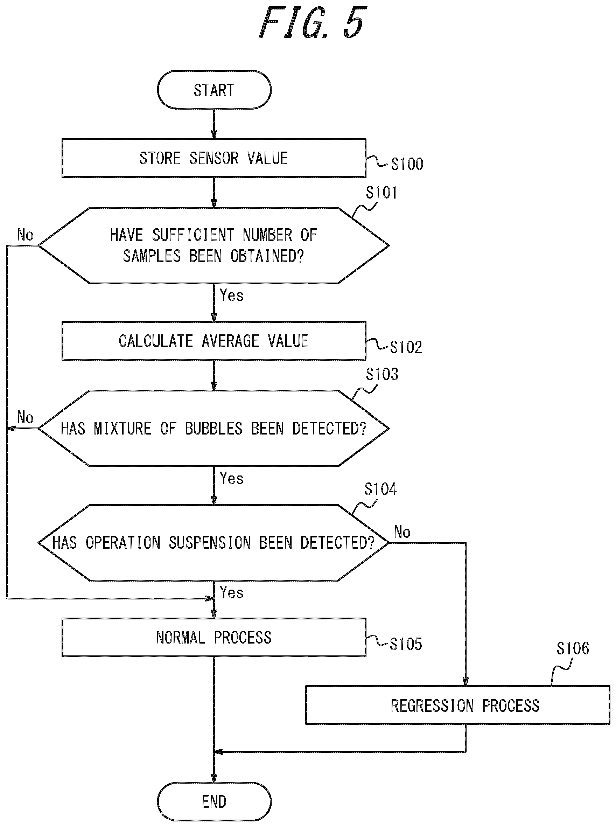

FIG. 5 is a flowchart that explains a first example of operations of the measurement device 1 in FIG. 1. FIG. 5 is a summary of main operations that are realized by the measurement device 1.

In step S100, the arithmetic unit 30 stores, as data in the memory 23, at least one type of sensor value, which has been acquired using the detector 10, required for calculating a parameter.

In step S101, the arithmetic unit 30 determines whether the number of samples obtained is sufficient to calculate an average value of a moving window for a predetermined time interval set for the sensor value stored in step S100. Upon determining that a sufficient number of samples have been obtained, the arithmetic unit 30 performs the process of step S102. Upon determining that a sufficient number of samples have not been obtained, the arithmetic unit 30 performs the process of step S105.

In step S102, upon determining, in step S101, that the sufficient number of samples have been obtained, the arithmetic unit 30 calculates the average value of the moving window for the predetermined time interval set for the sensor value stored in step S100.

In step S103, the arithmetic unit 30 determines, based on the average value calculated in step S102, whether the mixture of bubbles in the fluid has been detected. Upon determining that the mixture of bubbles has been detected, the arithmetic unit 30 performs the process of step S104. Upon determining that the mixture of bubbles has not been detected, the arithmetic unit 30 performs the process of step S105.

The arithmetic unit 30 determines whether the mixture of bubbles has been detected, by comparing the average value of the moving window for the predetermined time interval set for at least one type of parameter or sensor value, e.g., the sensor value in the flowchart in FIG. 5, with a first threshold value. The arithmetic unit 30 determines that the mixture of bubbles has been detected when the average value exceeds the first threshold value. The arithmetic unit 30 determines, using the second learning model L2 described above, the first threshold value, which is compared with the average value to determine the presence or absence of mixture of bubbles.

In step S104, upon determining, in step S103, that the mixture of bubbles has been detected, the arithmetic unit 30 determines whether operation suspension of the measurement device 1 has been detected. Upon determining that operation suspension of the measurement device 1 has been detected, the arithmetic unit 30 performs the process of step S105. Upon determining that operation suspension of the measurement device 1 is not detected, the arithmetic unit 30 performs the process of step S106.

In step S105, upon determining, in step S104, that operation suspension has been detected, the arithmetic unit 30 performs a normal process for when the operation of the measurement device 1 is under suspension. Upon determining, in step S101, that the sufficient number of samples have not been obtained, the arithmetic unit 30 performs a normal process related to parameter measurement of the measurement device 1. Upon determining, in step S103, that the mixture of bubbles has not been detected, the arithmetic unit 30 performs the normal process related to parameter measurement of the measurement device 1.

In step S106, upon determining, in step S104, that operation suspension has not been detected, the arithmetic unit 30, which has detected the mixture of bubbles in step S103, performs a regression process related to the parameter using a learning model built in advance and the data acquired in step S100. The arithmetic unit 30 thus performs the regression process using the first learning model L1 and outputs the parameter, upon classifying the presence of mixture of bubbles in the fluid.

As described above, the arithmetic unit 30 uses change-point detection that utilizes the average value of the moving window for any time interval. When the arithmetic unit 30 wants to detect the mixture of bubbles, for example, the arithmetic unit 30 constantly monitors at least one type of sensor value used in the regression process and the classification process. The arithmetic unit 30 determines that the mixture of bubbles has been detected when the monitored sensor value exceeds the set first threshold value. The arithmetic unit 30 calculates the average value of the moving window for the predetermined time interval and compares the average value with the first threshold value, in order to reduce false detection due to other factors such as noise, which are different from the mixture of bubbles. The first threshold value is determined based on the second learning model L2, which has been built in advance through supervised learning using training data.

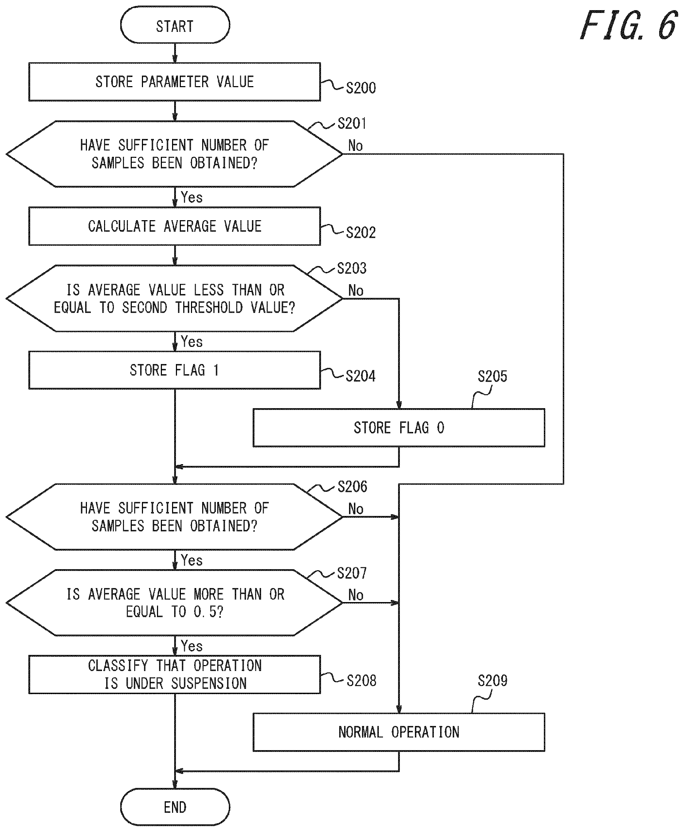

FIG. 6 is a flowchart that explains a second example of the operations of the measurement device 1 in FIG. 1. FIG. 6 illustrates the classification process for suspension classification that is performed in step S104 of FIG. 5 in more detail.

In step S200, the arithmetic unit 30 stores, in the memory 23, at least one type of parameter value calculated.

In step S201, the arithmetic unit 30 determines whether the number of samples obtained is sufficient to calculate an average value of a moving window for a predetermined time interval set for the parameter value stored in step S200. Upon determining that a sufficient number of samples have been obtained, the arithmetic unit 30 performs the process of step S202. Upon determining that a sufficient number of samples have not been obtained, the arithmetic unit 30 performs the process of step S209.

In step S202, upon determining, in step S201, that the sufficient number of samples have been obtained, the arithmetic unit 30 calculates the average value of the moving window for the predetermined time interval set for the parameter value stored in step S200.

In step S203, the arithmetic unit 30 determines whether the average value calculated in step S202 is less than or equal to a second threshold value. Upon determining that the average value is less than or equal to the second threshold value, the arithmetic unit 30 performs the process of step S204. Upon determining that the average value is more than the second threshold value, the arithmetic unit 30 performs the process of step S205. The arithmetic unit 30 determines, using the second learning model L2 described above, the second threshold value that is set for at least one type of parameter to set a flag indicating as being in operation or under suspension.

In step S204, upon determining, in step S203, that the average value is less than or equal to the second threshold value, the arithmetic unit 30 sets the flag to 1 and stores the information in the memory 23.

In step S205, upon determining, in step S203, that the average value is more than the second threshold value, the arithmetic unit 30 sets the flag to 0 and stores the information in the memory 23.

In step S206, the arithmetic unit 30 determines whether the number of samples obtained is sufficient to calculate an average value of a moving window for a predetermined time interval set for the flag values stored in step S204 and step S205. Upon determining that a sufficient number of samples have been obtained, the arithmetic unit 30 performs the process of step S207. Upon determining that a sufficient number of samples have not been obtained, the arithmetic unit 30 performs the process of step S209.

In step S207, upon determining, in step S206, that the sufficient number of samples have been obtained, the arithmetic unit 30 calculates the average value of the flag values. The average value is calculated by setting the moving window for the predetermined time interval to the flag values stored in step S204 and step S205, for example. The arithmetic unit 30 determines whether the calculated average value is more than or equal to 0.5. Upon determining that the average value is more than or equal to 0.5, the arithmetic unit 30 performs the process of step S208. Upon determining that the average value is less than 0.5, the arithmetic unit 30 performs the process of step S209.

In step S208, upon determining, in step S207, that the average value is more than or equal to 0.5, the arithmetic unit 30 classifies that the operation of the measurement device 1 is under suspension.

In step S209, upon determining, in step S207, that the average value is less than 0.5, the arithmetic unit 30 classifies that the measurement device 1 is in operation and performs a normal process related to parameter measurement of the measurement device 1. Upon determining, in step S201, that the sufficient number of samples have not been obtained, the arithmetic unit 30 performs the normal process related to parameter measurement of the measurement device 1. Upon determining, in step S206, that the sufficient number of samples have not been obtained, the arithmetic unit 30 performs the normal process related to parameter measurement of the measurement device 1.

The suspension classification illustrated in FIG. 6 is used, for example, when a distillation application is performed several times in a day, to classify between the first and second times and between the second and third times. In general, field instruments may not have sufficient hardware memory configuration due to power consumption and cost limitations.

By setting a range for the average value of the parameter wider, false detection related to operation suspension can be easily reduced, but there is a limit to a memory arrayed for use in averaging calculation. In field instruments, a calculation cycle for measurement values of the parameter is often in milliseconds. For example, to calculate the average value for 1 second with a sampling cycle of 10 ms, an array of 100 values is required. In reality, there is a very high risk of false detection in 1 second when the sensor value or the parameter value varies sharply from the effect of noise or the like. Therefore, an array of 60 seconds is required.

Therefore, an array of 60 seconds is prepared with values for every 100 cycles of a sampling cycle of 10 ms, as representative values. This means that, in order to calculate an average value for 60 seconds, it is required to prepare an array of only 60 representative values for 1 second, though it is conventionally required to prepare an array of 6000 values.

In the suspension classification, the arithmetic unit 30 does not immediately classify as being under suspension when the average value of the parameter for 60 seconds is less than or equal to the second threshold value, but sets the flag to 1 to indicate the point in time at which the average value becomes less than or equal to the second threshold value and stores the flag value in the array for 60 seconds. The arithmetic unit 30 similarly sets the flag to 0 to indicate as being in operation. The arithmetic unit 30 calculates the average value of these flag values, and classifies as being under suspension when the average value is more than or equal to any threshold value e.g., 0.5. The suspension classification as described above can greatly reduce the risk of false detection of operation suspension, while the measurement device 1 is in operation.

The method of calculating the average value, the process for suspension classification, the process for operation classification, and the like differ depending on the capabilities and application of the measurement device 1, and may be changed as appropriate to suit the specifications and application of the measurement device 1.

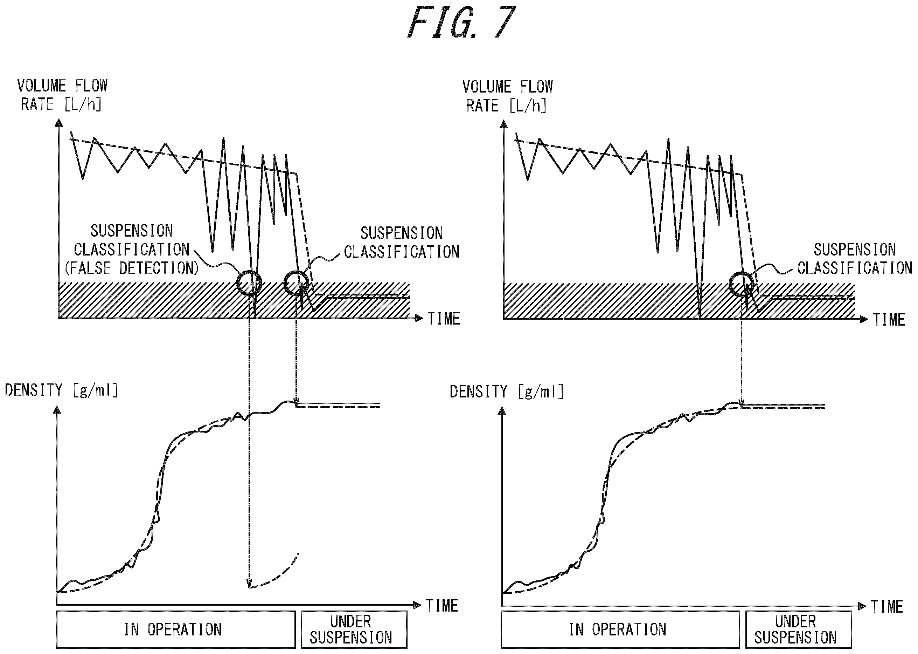

FIG. 7 is a schematic diagram that illustrates a third example of the operations of the measurement device 1 illustrated in FIG. 1. A set of graphs indicating variations in volume flow rate and density over time, which is included in the left half of FIG. 7, indicates a state in which the classification process for suspension classification described using FIG. 6 is not performed. The other set of graphs indicating variations in volume flow rate and density over time, which is included in the right half of FIG. 7, indicates a state in which the classification process for suspension classification described using FIG. 6 is performed. In FIG. 7, the solid lines represent parameter values output by a normal process related to parameter measurement of the measurement device 1. The broken lines represent parameter values output by the regression process of the measurement device 1.

For example, in the top left graph of FIG. 7, the classification process for suspension classification, which is explained using FIG. 6, is not performed, and the measurement device 1 is classified as having suspended based on the fact that a value of the volume flow rate has temporarily decreased to a diagonally shaded area beyond the second threshold value. The learning model is built by learning only in a state in which the measurement device 1 is in operation. Therefore, when the operation is under suspension, it is difficult for the measurement device 1 to output accurate parameter values using the regression process.

When the parameter drops instantaneously and the measurement device 1 falsely detects as having suspended, as illustrated in the upper left graph of FIG. 7, the total volume during operation used in the regression process for the density is reset to zero. Therefore, as illustrated in the lower left graph of FIG. 7, an output value of the density from the regression process also returns to an initial value.

In order to reduce such inaccurate output, the classification process for suspension classification explained using FIG. 6 is performed. According to this classification process, the arithmetic unit 30 classifies noise even when the parameter has decreased by the instantaneous noise, and performs a process that is not easily affected by the noise. The arithmetic unit 30 does not classify that the measurement device 1 has suspended based on the fact that the value of the volume flow rate has temporarily decreased to the diagonally shaded area beyond the second threshold value, but classifies that the measurement device 1 is under suspension based on the fact that the value of the volume flow rate has continuously exceeded the second threshold value.

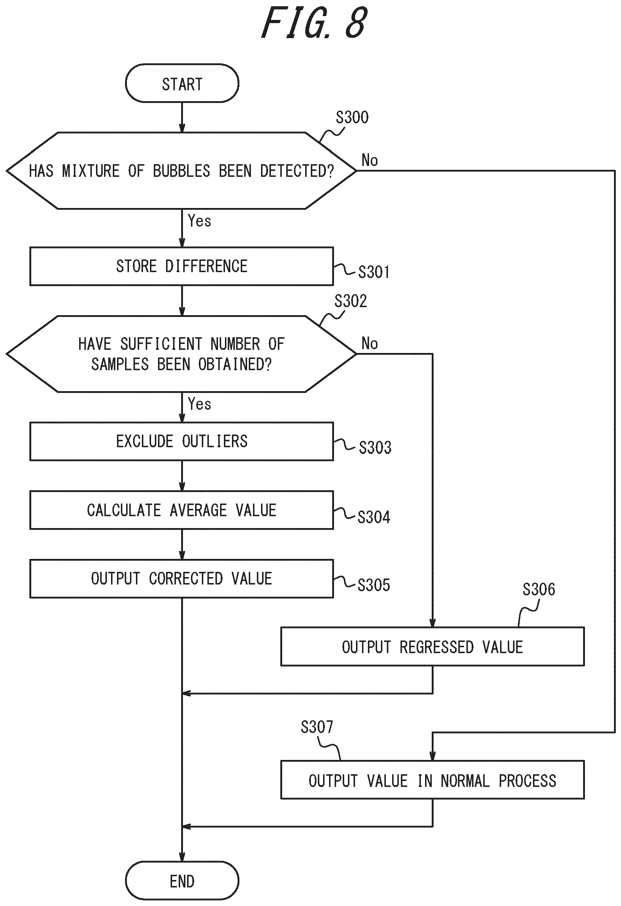

FIG. 8 is a flowchart that explains a fourth example of the operations of the measurement device 1 in FIG. 1. FIG. 8 illustrates an overview of a correction process for a parameter value output by the regression process of the measurement device 1.

A parameter such as the density of a fluid is expected to vary over time due to operation, such as in a distillation process. When the regression process is performed on such a fluid, an output value greatly depends on the parameter of the fluid at the beginning of the process. Therefore, when the parameter at the beginning of the process differs from operation to operation due to difference in an operation method by a user, or the like, the parameter value output by the regression process may deviate.

The arithmetic unit 30 corrects the output parameter, based on the difference between the parameter output by the regression process and the parameter during the absence of mixture of bubbles in the fluid. More specifically, the arithmetic unit 30 stores, in the memory 23, the difference between the parameter under a normal condition in which no bubbles are mixed in the fluid, and the parameter based on the regression process performed when bubbles have been detected. The arithmetic unit 30 performs the correction process for the parameter by adding a correction value to the parameter obtained when bubbles have been detected. The arithmetic unit 30 stores differences used for the correction process in an array in the memory 23, excludes outliers, and calculates the average of the differences as the correction value.

In step S300, the arithmetic unit 30 determines whether the mixture of bubbles in the fluid has been detected, for example, in the same manner as in step S103 of FIG. 5. Upon determining that the mixture of bubbles has been detected, the arithmetic unit 30 performs the process of step S301. Upon determining that the mixture of bubbles has not been detected, the arithmetic unit 30 performs the process of step S307.

In step S301, upon determining in step S300 that the mixture of bubbles has been detected, the arithmetic unit 30 stores, in the memory 23, the difference between the parameter under the normal condition in which no bubbles are mixed in the fluid, and the parameter based on the regression process when bubbles have been detected.

In step S302, the arithmetic unit 30 determines whether the number of samples obtained is sufficient to calculate the average value of differences stored in step S301. Upon determining that a sufficient number of samples have been obtained, the arithmetic unit 30 performs the process of step S303. Upon determining that a sufficient number of samples have not been obtained, the arithmetic unit 30 performs the process of step S306.

In step S303, upon determining, in step S302, that the sufficient number of samples have been obtained, the arithmetic unit 30 excludes outliers from the differences stored in step S301.

In step S304, after excluding the outliers in step S303, the arithmetic unit 30 calculates, as the correction value, the average of the differences stored in step S301.

In step S305, the arithmetic unit 30 outputs, to the output interface 22, for example, a corrected parameter value that is obtained by adding the correction value calculated in step S304 to the parameter value obtained by the regression process when bubbles have been detected.

In step S306, upon determining, in step S302, that the sufficient number of samples have not been obtained, the arithmetic unit 30 outputs, to the output interface 22, for example, the parameter value obtained by the regression process.

In step S307, upon determining, in step S300, that the mixture of bubbles has not been detected, the arithmetic unit 30 outputs, to the output interface 22, for example, a parameter value obtained in a normal process in which neither the regression process nor the correction process is performed.

The details of an algorithm used in the measurement device 1 will be explained below as an example.

At the same time as the start of operation of the measurement device 1, a timer count inside the measurement device 1 starts to count up. The arithmetic unit 30 of the measurement device 1 stores, in the memory 23, at least one type of parameter or sensor value output by the normal process, which is used for the classification of operation classification, every time the timer count reaches 100 cycles.

In order to classify the presence or absence of mixture of bubbles, the arithmetic unit 30 needs to acquire sample values the number of which is more than or equal to an array prepared at the least. For example, an array for 60 seconds is prepared, the arithmetic unit 30 calculates an average value after a lapse of 60 seconds. Therefore, while the average value is not calculated, the classification process related to the presence or absence of mixture of bubbles does not function even when bubbles are mixed in the fluid. Therefore, there is a trade-off between the size of the array, which is a measure to reduce false detection, and the loading time for the classification related to the presence or absence of mixture of bubbles. However, the timer count is performed only once because the timer count starts when the measurement device 1 is powered on. Therefore, the above does not usually cause a major problem.

When the timer count is more than or equal to the prepared array, the arithmetic unit 30 always executes the classification process related to the presence or absence of mixture of bubbles and the classification process related to operation suspension at the same time. The first threshold value and the second threshold value obtained by machine learning using the second learning model L2 described above are implemented in the measurement device 1.

In the classification process related to the presence or absence of mixture of bubbles, as described above, the arithmetic unit 30 compares the average value of at least one type of sensor value with the first threshold value. In the classification process related to operation suspension, as described above, the arithmetic unit 30 compares the parameter value for the application with the second threshold value.

Upon determining that bubbles are mixed in the fluid, the arithmetic unit 30 performs the regression process using the first learning model L1 after learning, which has been built in advance, and outputs the parameter value. Upon determining that the measurement device 1 is under suspension, the arithmetic unit 30 determines that the operation of the application, such as distillation, has stopped, and sets the timer count, and the correction value of the parameter and the corresponding array of differences to 0.

Therefore, the timer count is reset, and when the operation of the application process such as distillation is started again, the parameter is stored in the array again. Thereby, the arithmetic unit 30 repeatedly performs the classification process related to the presence or absence of mixture of bubbles and the classification process related to operation suspension.

According to the measurement device 1 of the first embodiment described above, it is possible to measure the parameter more accurately, even when foreign matter has been mixed in the fluid while the parameter of the fluid is varying over time. The measurement device 1 acquires the result of at least one of the regression process or the classification process related to the parameter, which has been performed using the acquired data and the learning model built in advance based on the data when foreign matter has been mixed in the fluid. Therefore, the measurement device 1 can also be easily applied to fluids whose parameters vary over time, such as in a distillation process. Even when foreign matter such as bubbles is mixed in such fluids, the measurement device 1 can output accurate measurement values for the parameters using the regression process.

The measurement device 1 acquires the result by performing at least one of the regression process or the classification process. The measurement device 1 performs at least one of the regression process or the classification process by itself. Thereby, the measurement device 1 can complete, within the measurement device 1 itself, various processes from a learning phase for building the learning model to an estimation phase using the learning model after learning.

Since the measurement device 1 builds the learning model in advance through supervised learning using the data when foreign matter has been mixed in the fluid, and the labels, the measurement device 1 can perform a learning process with higher accuracy based on the labels. The measurement device 1 can perform at least one of the regression process or the classification process with higher accuracy, using the learning model built in such a learning process.

The measurement device 1 acquires the results of the regression process and the classification process performed using the learning models different from each other. The measurement device 1 uses the independent learning models for the regression process and the classification process. The use of the plurality of learning models, as described above, allows the measurement device 1 to achieve output with higher accuracy in the regression process and the classification process.

The measurement device 1 can determine the first threshold value more appropriately by determining the first threshold value, which is used for classifying the presence or absence of mixture of foreign matter, using the learning model. The measurement device 1 can determine the first threshold value, which is conventionally set by the user arbitrarily based on the user's experience or the like, objectively and accurately. Therefore, the measurement device 1 can perform the classification process for the presence or absence of mixture of foreign matter using the first threshold value with higher accuracy.

Upon classifying the presence of mixture of foreign matter in the fluid, the measurement device 1 performs the regression process using the learning model, and outputs the parameter. This allows the measurement device 1 to output a more accurate measurement value by regressing the parameter, even when an anomaly occurs in the parameter in the normal process due to the effect of the foreign matter mixed in the fluid.

The measurement device 1 corrects the output parameter based on the difference between the parameter output by the regression process and the parameter during the absence of mixture of foreign matter in the fluid. Therefore, even when there are variations in the operation method, parameters, and the like at the beginning of the process, the measurement device 1 can acquire an error in the parameter after the regression process, which is based on such variations, and correct the error. The measurement device 1 can accurately correct the parameter after the regression process, even when the conditions, including the type and quantity of small bubbles such as microbubbles, the time when bubbles continue to enter for a long time, and the like, vary from operation to operation.

The measurement device 1 can determine the second threshold value more appropriately by determining the second threshold value, which is for setting the flag indicating as being in operation or under suspension, using the learning model. The measurement device 1 can determine the second threshold value, which is conventionally set by the user arbitrarily based on the user's experience or the like, objectively and accurately. Therefore, the measurement device 1 can perform the classification process for suspension classification to reduce false detection of operation suspension using the second threshold value with higher accuracy.

Since the parameter includes at least one type of the density, volume flow rate, mass flow rate, or bubble volume fraction of the fluid, the measurement device 1 can perform the measurement and regression process of the parameter required for functioning as a Coriolis flowmeter, for example. The measurement device 1 can function as a Coriolis flowmeter.

In the first embodiment described above, the measurement device 1 has been explained as building the learning model in advance through supervised learning, using the data when foreign matter has been mixed in the fluid, and the labels, but is not limited to this. The measurement device 1 may build the learning model to be used in the regression process in advance through unsupervised learning or semi-supervised learning. The measurement device 1 may build the learning model to be used in the classification (clustering) process in advance through unsupervised learning or semi-supervised learning.

In the first embodiment described above, the measurement device 1 has been explained as acquiring the results of the regression process and the classification process performed using the learning models different from each other, but is not limited to this. The measurement device 1 may use the same learning model that is common to each other, instead of using the independent learning models for the regression process and the classification process. Conversely, the measurement device 1 may further use, in the regression process, first learning models L1 different from each other for different types of parameters. For example, for the volume flow rate and the density, the first learning model L1 does not necessarily have to be the same. The measurement device 1 may further use, in the classification process, second learning models L2 different from each other for different types of classification.

In the first embodiment described above, the measurement device 1 has been explained as determining the first threshold value, which is used for classifying the presence or absence of mixture of foreign matter, using the learning model, but is not limited to this. The measurement device 1 may not perform such a classification process using a learning model. The measurement device 1 may determine the first threshold value to a value set as appropriate by the user.

In the first embodiment described above, the measurement device 1 has been described as performing the regression process using the learning model and outputting the parameter, upon classifying the presence of mixture of foreign matter in the fluid, but is not limited to this. The measurement device 1 may not perform such a regression process.

In the first embodiment described above, the measurement device 1 has been explained as correcting the parameter output by the regression process, but is not limited to this. The measurement device 1 may not perform such a correction process.

In the first embodiment described above, the measurement device 1 has been explained as determining the second threshold value, which is used for setting the flag indicating as being in operation or under suspension, using the learning model, but is not limited to this. The measurement device 1 may not perform such a determination process using a learning model. The measurement device 1 may determine the second threshold value to a value set as appropriate by the user.

In the first embodiment described above, the parameter has been explained as including at least one type of the density, volume flow rate, mass flow rate, or bubble volume fraction of the fluid, but is not limited to this. The parameter may include any other physical quantity that can be measured by field instruments. Accordingly, the measurement device 1 is not limited to a Coriolis flowmeter. The measurement device 1 may include other field instruments.

In the first embodiment described above, the fluid has been described as including a liquid, but is not limited to this. The fluid may also include a gas.

### (Second Embodiment)

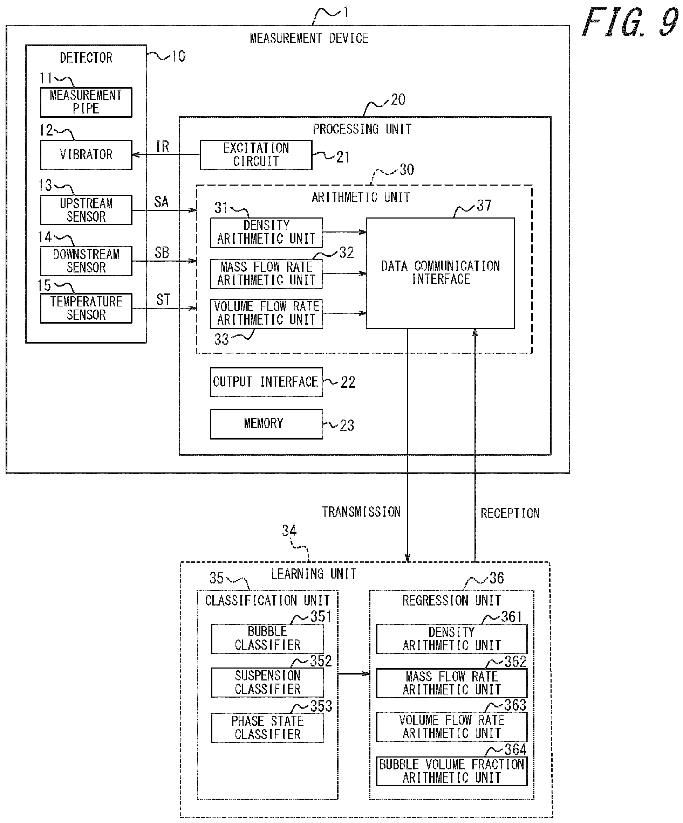

FIG. 9 is a block diagram illustrating a schematic configuration of a measurement device 1 according to a second embodiment of the present disclosure. The configuration and functions of the measurement device 1 according to the second embodiment will be mainly explained with reference to FIG. 9. The measurement device 1 according to the second embodiment differs from that of the first embodiment in that the measurement device 1 does not have a learning unit 34 in itself.

Other configuration, functions, effects, variations, and the like are the same as those in the first embodiment, and the corresponding explanations also apply to the measurement device 1 according to the second embodiment. In the following description, the same components as in the first embodiment are denoted with the same reference numerals, and explanations thereof are omitted. The differences from the first embodiment will be mainly explained.

In the first embodiment, the arithmetic unit 30 has been described as acquiring the result by performing at least one of the regression process or the classification process, but is not limited to this. The arithmetic unit 30 does not have to perform at least one of the regression process or the classification process by itself. The arithmetic unit 30 may acquire, via communication, the result of at least one of the regression process or the classification process performed outside the measurement device 1. For example, the arithmetic unit 30 may acquire, via communication, the result of at least one of the regression process or the classification process performed by an external device. The learning unit 34, which includes both the classification unit 35 and the regression unit 36, may be provided outside the measurement device 1.

The external device having the learning unit 34 includes one or more server apparatuses that can communicate with each other, which are used in edge computing, a cloud system, and the like, for example. Not limited to these, the external device may include mobile devices such as mobile phones, smartphones, and tablets, as well as any general purpose electronic devices such as personal computers (PCs), and may also include other electronic devices dedicated to the measurement device 1.

The arithmetic unit 30 of measurement device 1 further includes a data communication interface 37. The data communication interface 37 includes a communication module that conforms to a communication standard based on any wireless or wired communication. The communication standard includes wireless local area network (LAN) standards, short-range wireless communication standards, mobile communication standards such as the 4th generation (4G) and the 5th generation (5G), and Internet standards. The measurement device 1 is communicably connected to the above external device via the data communication interface 37.

The measurement device 1 acquires, via communication, the result of at least one of the regression process or the classification process that is performed outside the measurement device 1, and accordingly does not need to perform calculation related to at least one of the regression process or the classification process. Therefore, the measurement device 1 can reduce an operational load related to its operation.

In the second embodiment described above, both the classification unit 35 and the regression unit 36 have been explained as being provided outside the measurement device 1, but are not limited to this. Any one of the classification unit 35 and the regression unit 36 may be provided inside the measurement device 1, and the other may be provided outside the measurement device 1.

In the second embodiment described above, the various processes from the learning phase for building the learning model to the estimation phase using the learning model after learning are performed outside the measurement device 1, but are not limited to this. Either various processes in the learning phase or various processes in the estimation phase may be performed by the measurement device 1, and the remaining various processes may be performed by the external device.

Although the present disclosure has been explained based on the drawings and examples, it should be noted that a person skilled in the art would be able to easily make various modifications and corrections based on the present disclosure. Therefore, these modifications and corrections should be included within the scope of the present disclosure. For example, the functions and the like included in each component, each step, or the like can be rearranged so as not to contradict logically, and multiple components, steps, or the like may be combined into one, or split into multiple.

For example, the present disclosure can also be realized as a program that describes process contents that realize each function of the measurement device 1 described above, or as a storage medium that records the program. It should be understood that these are also included within the scope of the present disclosure.

Examples of some embodiments of the present disclosure are described below. However, it should be noted that the embodiments of the present disclosure are not limited to these examples.
[Appendix 1] A measurement device configured to measure at least one type of parameter indicating a state of a fluid, the measurement device comprising:
   a detector configured to acquire, as data, at least one type of sensor value required for calculating the parameter; and
   an arithmetic unit configured to calculate the parameter based on the data acquired using the detector,
   wherein the arithmetic unit is configured to acquire a result of at least one of a regression process or a classification or clustering process related to the parameter, the regression process or the classification or clustering process being performed using the acquired data and a learning model built in advance based on the data when foreign matter has been mixed in the fluid.
[Appendix 2] The measurement device according to appendix 1, wherein the arithmetic unit is configured to acquire the result by performing at least one of the regression process or the classification or clustering process.
[Appendix 3] The measurement device according to appendix 1, wherein the arithmetic unit is configured to acquire, via communication, the result of at least one of the regression process or the classification or clustering process performed outside the measurement device.
[Appendix 4] The measurement device according to any one of appendices 1 to 3, wherein the arithmetic unit is configured to build in advance the learning model through supervised learning using the data when foreign matter has been mixed in the fluid, and a label, or build in advance the learning model through unsupervised learning.
[Appendix 5] The measurement device according to any one of appendices 1 to 4, wherein the arithmetic unit is configured to acquire results of the regression process and the classification or clustering process that are performed using learning models different from each other.
[Appendix 6] The measurement device according to any one of appendices 1 to 5, wherein
   the classification or clustering process includes a process of classifying or clustering presence or absence of mixture of foreign matter in the fluid, and
   the arithmetic unit is configured to determine, using the learning model, a first threshold value that is to be compared with an average value of a moving window of a predetermined time interval set for at least one type of the parameter or the sensor value in order to classify or cluster the presence or absence of mixture of foreign matter.
[Appendix 7] The measurement device according to appendix 6, wherein upon classifying or clustering the presence of mixture of foreign matter in the fluid, the arithmetic unit is configured to perform the regression process using the learning model, and output the parameter.
[Appendix 8] The measurement device according to appendix 7, wherein the arithmetic unit is configured to correct the output parameter, based on a difference between the output parameter and the parameter during the absence of mixture of foreign matter in the fluid.
[Appendix 9] The measurement device according to any one of appendices 1 to 8, wherein
   the classification or clustering process includes a process of classifying or clustering whether operation of the measurement device has suspended, and
   the arithmetic unit is configured to determine, using the learning model, a second threshold value that is set for at least one type of the parameter in order to set a flag indicating as being in operation or under suspension.
[Appendix 10] The measurement device according to any one of appendices 1 to 9, wherein the parameter includes at least one type of a density, volume flow rate, mass flow rate, or bubble volume fraction of the fluid.

### REFERENCE SIGNS LIST

- 1: measurement device
- 10: detector
- 11: measurement pipe
- 12: vibrator
- 13: upstream sensor
- 14: downstream sensor
- 15: temperature sensor
- 20: processing unit
- 21: excitation circuit
- 22: output interface
- 23: memory
- 30: arithmetic unit
- 31: density arithmetic unit
- 32: mass flow rate arithmetic unit
- 33: volume flow rate arithmetic unit
- 34: learning unit
- 35: classification unit
- 351: bubble classifier
- 352: suspension classifier
- 353: phase state classifier
- 36: regression unit
- 361: density arithmetic unit
- 362: mass flow rate arithmetic unit
- 363: volume flow rate arithmetic unit
- 364: bubble volume fraction arithmetic unit
- 37: data communication interface
- IR: drive current
- L1: first learning model
- L2: second learning model
- SA: displacement signal
- SB: displacement signal
- ST: temperature signal

## Claims

1. A measurement device configured to measure at least one type of parameter indicating a state of a fluid, the measurement device comprising:
a detector configured to acquire, as data, at least one type of sensor value required for calculating the parameter; and
an arithmetic unit configured to calculate the parameter based on the data acquired using the detector,
wherein the arithmetic unit is configured to acquire a result of at least one of a regression process or a classification or clustering process related to the parameter, the regression process or the classification or clustering process being performed using the acquired data and a learning model built in advance based on the data when foreign matter has been mixed in the fluid.

2. The measurement device according to claim 1, wherein the arithmetic unit is configured to acquire the result by performing at least one of the regression process or the classification or clustering process.

3. The measurement device according to claim 1, wherein the arithmetic unit is configured to acquire, via communication, the result of at least one of the regression process or the classification or clustering process performed outside the measurement device.

4. The measurement device according to any one of claims 1 to 3, wherein the arithmetic unit is configured to build in advance the learning model through supervised learning using the data when foreign matter has been mixed in the fluid, and a label, or build in advance the learning model through unsupervised learning.

5. The measurement device according to any one of claims 1 to 3, wherein the arithmetic unit is configured to acquire results of the regression process and the classification or clustering process that are performed using learning models different from each other.

6. The measurement device according to any one of claims 1 to 3, wherein
the classification or clustering process includes a process of classifying or clustering presence or absence of mixture of foreign matter in the fluid, and
the arithmetic unit is configured to determine, using the learning model, a first threshold value that is to be compared with an average value of a moving window of a predetermined time interval set for at least one type of the parameter or the sensor value in order to classify or cluster the presence or absence of mixture of foreign matter.

7. The measurement device according to claim 6, wherein upon classifying or clustering the presence of mixture of foreign matter in the fluid, the arithmetic unit is configured to perform the regression process using the learning model, and output the parameter.

8. The measurement device according to claim 7, wherein the arithmetic unit is configured to correct the output parameter, based on a difference between the output parameter and the parameter during the absence of mixture of foreign matter in the fluid.

9. The measurement device according to any one of claims 1 to 3, wherein
the classification or clustering process includes a process of classifying or clustering whether operation of the measurement device has suspended, and
the arithmetic unit is configured to determine, using the learning model, a second threshold value that is set for at least one type of the parameter in order to set a flag indicating as being in operation or under suspension.

10. The measurement device according to any one of claims 1 to 3, wherein the parameter includes at least one type of a density, volume flow rate, mass flow rate, or bubble volume fraction of the fluid.
